# FASCICULE DE BREVET EUROPEEN

(11) **EP 3 478 956 B1**
(45) Date de publication et mention de la délivrance du brevet: **04.05.2022**
(21) Numéro de dépôt: 17745807.2
(22) Date de dépôt: 28.06.2017
(51) Int. Cl.: F02K 9/97, F02K 9/64

(54) **MOTEUR-FUSÉE A DIVERGENT COMPOSITE**
RAKETENMOTOR MIT ZUSAMMENGESETZTEM DIVERGIERENDEM DÜSENABSCHNITT
ROCKET MOTOR WITH COMPOSITE DIVERGENT NOZZLE SECTION

(30) Priorité: 29.06.2016 FR 1656095
(43) Date de publication de la demande: 08.05.2019
(73) Titulaire: ArianeGroup SAS, 78130 Les Mureaux (FR)
(72) Inventeur: PICHON, Thierry, 33480 Avensan (FR); ZORRILLA, Xavier, 33390 Cars (FR); HERRAIZ, Ivan, 33185 Le Haillan (FR); LONGUEVILLE, Laurent, 33290 Le Pian Medoc (FR)
(74) Mandataire: Cabinet Beau de Loménie
(86) Numéro de dépôt international: PCT/FR2017/051730
(87) Numéro de publication internationale: WO 2018/002523

(56) Documents cités:
- EP-A2- 2 489 866
- WO-A1-2015/055924
- US-A1- 2003 136 128

## Description

### Arrière-plan de l'invention

La présente invention concerne une tuyère comprenant une chambre de combustion en matériau métallique et un divergent en matériau composite formé d'une paroi en forme de cône, le divergent en matériau composite étant reliée à l'extrémité aval de la chambre de combustion.

Pour des pièces destinées à être utilisées dans le domaine spatial, il est bien connu d'utiliser des matériaux composites thermostructuraux, c'est-à-dire des matériaux composites ayant des propriétés mécaniques qui les rendent aptes à constituer des éléments de structure et ayant la capacité de conserver ces propriétés à des températures élevées. De tels matériaux thermostructuraux sont notamment les matériaux composites carbone/carbone ou C/C (renfort en fibres de carbone et matrice en carbone) et les matériaux composites à matrice céramique ou CMC, par exemple C/SiC (renfort en fibres de carbone et matrice en carbure de silicium), C/C-SiC (renfort en fibres de carbone et matrice mixte carbone-carbure de silicium) ou encore SiC/SiC.

Le document US 2003/136128 divulgue une tuyère ayant une chambre de combustion métallique à l'aval de laquelle est raccordé un divergent en matériau composite. Dans ce document, la liaison entre l'extrémité aval de la chambre de combustion et l'extrémité amont du divergent en matériau composite est réalisée au moyen d'une bride radiale présente sur l'extrémité amont du divergent. Plus précisément, à son extrémité amont, la paroi en forme de cône du divergent est prolongée radialement vers l'extérieur par une portion annulaire de forte épaisseur afin de former une bride radiale permettant le passage d'organe de serrage pour la fixation du divergent en matériau composite sur l'extrémité aval de la chambre de combustion.

Cette solution d'accrochage présente toutefois l'inconvénient d'augmenter significativement le coût de fabrication du divergent en raison de la présence nécessaire d'une portion de surépaisseur dans le matériau composite du divergent et de l'usinage supplémentaire de cette portion pour former la bride.

Or, il existe un besoin pour des tuyères allégés ayant un coût de fabrication réduit.

### Objet et résumé de l'invention

A cet effet, la présente invention propose une tuyère présentant un axe longitudinal comprenant une chambre de combustion en matériau métallique présentant une extrémité aval et un divergent en matériau composite formé d'une paroi en forme de cône s'étendant entre une extrémité amont et une extrémité aval, l'extrémité amont du divergent en matériau composite étant reliée à l'extrémité aval de la chambre de combustion, caractérisée en ce qu'elle comprend en outre une bride annulaire en matériau métallique comprenant une première partie solidaire de la chambre de combustion et une deuxième partie s'étendant au-delà de l'extrémité aval de la chambre de combustion dans la direction de l'axe longitudinal de la tuyère et en ce que l'extrémité amont du divergent en matériau composite est fixée sur la deuxième partie de la bride annulaire par une pluralité d'organes de serrage comprenant chacun une vis de fixation, chaque vis de fixation traversant la paroi en forme de cône du divergent en matériau composite au niveau de l'extrémité amont de ladite paroi.

Ainsi, la tuyère de la présente invention comprend un divergent en matériau composite, ce qui permet d'alléger significativement la masse globale de la tuyère. En outre, dans la tuyère de l'invention, la paroi en forme de cône constituant le divergent est directement fixée sur une bride axiale solidaire de la chambre de combustion. Il n'est donc plus nécessaire de réaliser une portion de surépaisseur dans le matériau composite du divergent ni de réaliser des usinages spécifiques pour la formation d'une bride dans le divergent, ce qui permet de simplifier la fabrication du divergent à une simple paroi fine (« near net shape ») et de réduire, par conséquent, le coût de fabrication du divergent. La fabrication de divergents selon l'invention est encore simplifiée et rationalisée en ce que, grâce à leur forme simple en cône, les préformes destinées à former le divergent peuvent être facilement empilées dans un même four de densification, ce qui permet de réduire le coût de fabrication unitaire d'une tuyère.

Selon une caractéristique particulière de la tuyère de l'invention, la chambre de combustion comprend un circuit de refroidissement dans lequel un fluide de refroidissement est destiné à circuler, le circuit de refroidissement comprenant au moins un premier canal annulaire de circulation d'un fluide de refroidissement s'étendant le long de l'extrémité aval de la chambre de combustion et à proximité des organes de serrage. La zone de la chambre de combustion où est réalisée la fixation axiale avec le divergent est ainsi refroidie, ce qui permet de maintenir les parties métalliques présentes dans cette zone à des températures raisonnables. Des matériaux métalliques réfractaires, tels que l'alliage molybdène TZM, peuvent être ainsi utilisés pour les organes de serrage.

Selon une autre caractéristique particulière de la tuyère de l'invention, la chambre de combustion comprend un circuit de refroidissement dans lequel le premier canal annulaire de circulation d'un fluide de refroidissement est présent en amont des organes de serrage et dans laquelle le circuit de refroidissement comprend un deuxième canal annulaire de circulation d'un fluide de refroidissement s'étendant le long de l'extrémité libre de la deuxième partie de la bride annulaire, ledit deuxième canal annulaire de circulation étant présent en aval des organes de serrage. La zone de la chambre de combustion et de la bride annulaire où est réalisée la fixation axiale avec le divergent est ainsi refroidie, ce qui permet de maintenir les parties métalliques présentes dans cette zone à des températures raisonnables. Le circuit de refroidissement peut comprendre en outre une pluralité de conduits axiaux communiquant avec les premier et deuxième canaux annulaires, chaque conduit axial étant présent entre deux organes de serrage adjacents. Dans ce cas, le fluide de refroidissement circule autour des organes de serrage, ce qui permet de maintenir la liaison entre la chambre de combustion et le divergent à des températures relativement basses et d'utiliser des matériaux métalliques réfractaires, tels que l'alliage molybdène TZM, pour les organes de serrage. Selon un aspect particulier de ce circuit de refroidissement, les conduits axiaux communiquant avec les premier et deuxième canaux annulaires sont logés dans des raidisseurs présents sur la face externe de la tuyère.

Selon une autre caractéristique de la tuyère de l'invention, un joint est interposé entre la face interne de la deuxième partie de la bride annulaire et la face externe de la paroi du divergent. Cela permet de renforcer l'étanchéité entre ces deux pièces.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue schématique d'une tuyère selon un mode de réalisation de l'invention ;
- la figure 2 est une vue schématique en perspective éclatée de la tuyère de la figure 1 ;
- la figure 3 est une vue schématique en coupe montrant la liaison entre la chambre de combustion et le divergent de la tuyère de la figure 1 ;
- la figure 4 est une vue schématique d'une tuyère selon un autre mode de réalisation de l'invention ;
- la figure 5 est une vue schématique en perspective éclatée de la tuyère de la figure 4 ;
- les figures 6 et 7 sont des vues schématiques en coupe montrant la liaison entre la chambre de combustion et le divergent de la tuyère de la figure 4.

### Description détaillée d'un mode de réalisation

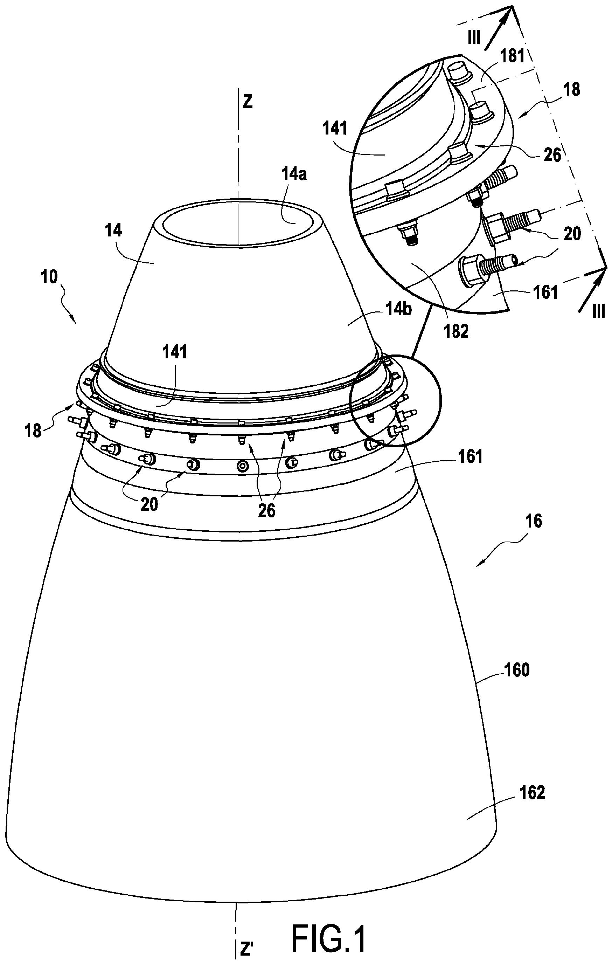

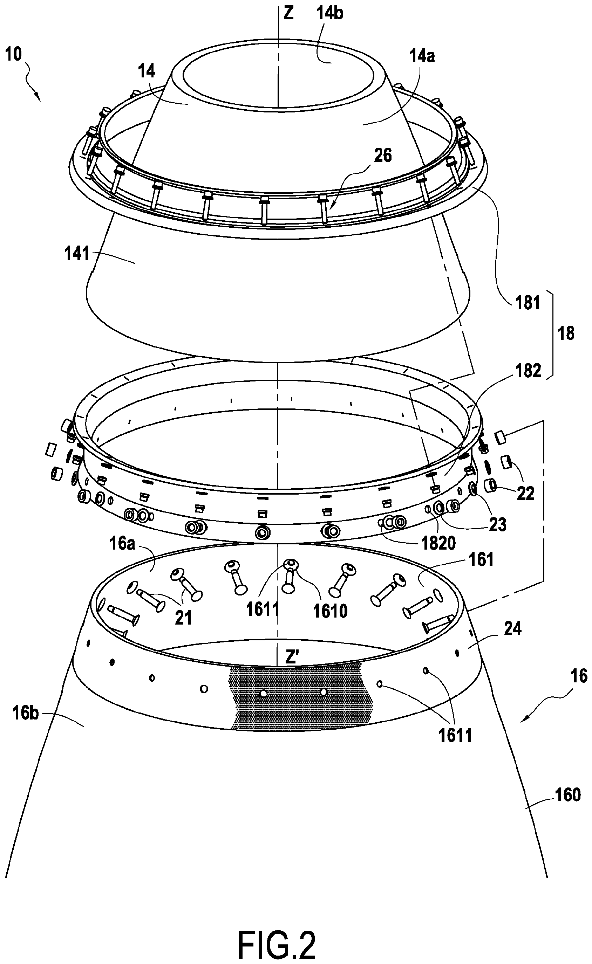

Les figures 1 et 2 illustrent une tuyère 10 de moteur-fusée conformément à un mode de réalisation de l'invention. La tuyère 10 d'axe longitudinal ZZ' comprend une chambre de combustion en matériau métallique 14 présentant une extrémité aval 141 et un divergent 16 en matériau composite formée d'une paroi 160 en forme de cône s'étendant entre une extrémité amont 161 et une extrémité aval 162, l'extrémité amont 161 du divergent 16 en matériau composite étant reliée à l'extrémité aval 141 de la chambre de combustion 14. La tuyère 10 comprend en outre une bride annulaire 18 en matériau métallique comprenant une première partie 181 solidaire de la chambre de combustion 16 et une deuxième partie 182 s'étendant au-delà de l'extrémité aval 141 de la chambre de combustion 14 dans la direction de l'axe longitudinal ZZ' de la tuyère 10. L'extrémité amont 161 du divergent 16 en matériau composite est fixée sur la deuxième partie 182 de la bride annulaire 18 par une pluralité d'organes de serrage 20 comprenant chacun une vis de fixation 21 et un écrou 22, chaque vis de fixation 21 traversant la paroi 160 en forme de cône du divergent 16 en matériau composite au niveau de l'extrémité amont 161 de la paroi 160.

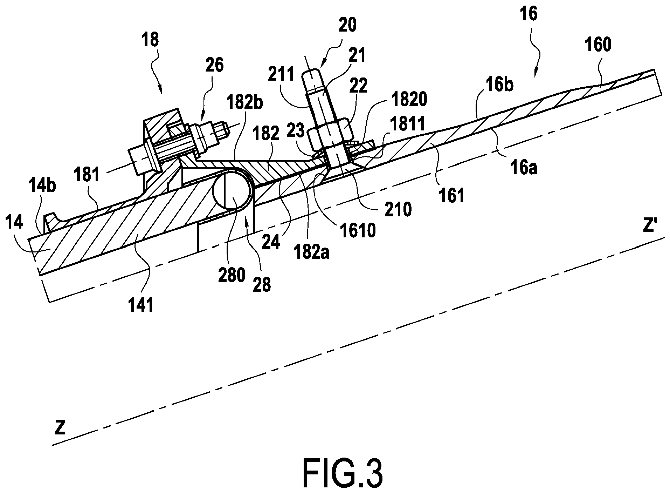

Plus précisément, comme illustré sur la figure 3, la première partie 181 de la bride annulaire 18 est fixée sur la face externe 14b de la chambre de combustion par une liaison métal/métal réalisée par exemple par brasage ou par soudage. La deuxième partie 182 de la bride annulaire 18 est fixée à la paroi 160 du divergent 16 par des organes de serrage 20 constitué ici d'une vis 21 et d'un écrou 22. Chaque vis 21 comporte une tête conique 210 qui est logée dans une fraisure 1610 présente sur la face interne 16a de la paroi 160 du divergent 16, la tige 211 de la vis 21 traversant un orifice 1611 présent dans la paroi 160 dans le prolongement de la fraisure 1610 et un orifice 1820 présent dans la deuxième partie 182 de la bride annulaire 18. Un écrou 22 est vissé sur la tige 211 du côté de la face externe 182b de la deuxième partie 182 de la bride annulaire. Comme illustrée sur la figure 3, une rondelle élastique 23 (ou rondelle Belleville) peut être interposée entre l'écrou 22 et la face externe 182b de la deuxième partie 182 de la bride annulaire 18 afin notamment de limiter les contraintes dans le matériau composite de la paroi 160 lors de la dilatation des organes de serrage 20 et de la deuxième partie 182. Un joint 24, par exemple sous forme d'une feuille de graphite, est interposé entre la face interne 182a de la deuxième partie 182 de la bride annulaire 18 et la face externe 16b de la paroi 160 du divergent 16 en regard de la deuxième partie 182.

La deuxième partie 182 de la bride annulaire 18 est en outre fixée à la première partie 181 de la bride annulaire 18 par des organes de serrage 26 de type vis-écrou, la bride 18 réalisant ainsi une liaison rigide entre la chambre de combustion 14 et le divergent 16.

L'extrémité aval 141 de la chambre de combustion comprend en outre un circuit de refroidissement 28 dans lequel un fluide de refroidissement est destiné à circuler. Le circuit de refroidissement 28 comprend ici un canal annulaire 280 de circulation d'un fluide de refroidissement qui s'étend le long de l'extrémité aval 141 de la chambre de combustion 14 et à proximité des organes de serrage 20.

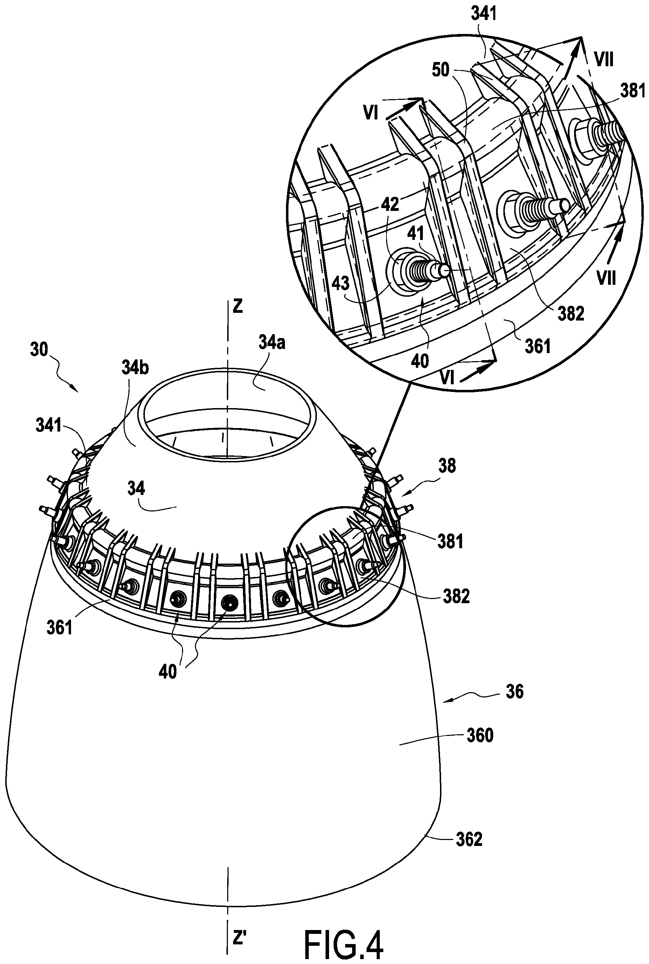

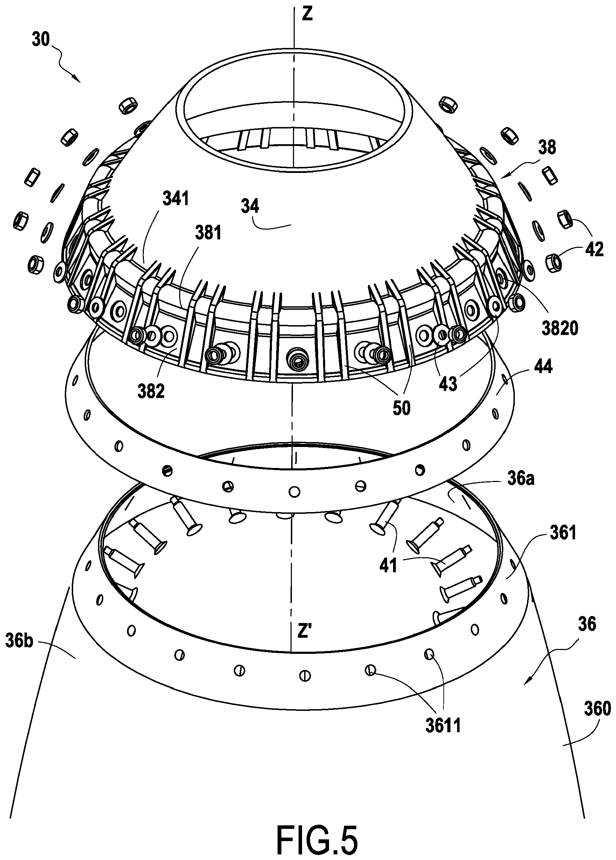

Les figures 4 et 5 illustrent un autre mode de réalisation d'une tuyère selon l'invention qui diffère de la tuyère 10 décrite précédemment notamment en ce que la bride annulaire est réalisée dans le prolongement de l'extrémité aval de la chambre de combustion et en ce que le circuit de refroidissement comporte plusieurs canaux et conduits de circulation d'un fluide de refroidissement qui s'étendent autour des organes de serrage.

Plus précisément, sur les figures 4 et 5, une tuyère 30 de moteur-fusée et d'axe longitudinal ZZ' comprend une chambre de combustion en matériau métallique 34 présentant une extrémité aval 341 et un divergent 36 en matériau composite formée d'une paroi 360 en forme de cône s'étendant entre une extrémité amont 361 et une extrémité aval 362, l'extrémité amont 361 du divergent 36 en matériau composite étant reliée à l'extrémité aval 341 de la chambre de combustion 34. La tuyère 30 comprend en outre une bride annulaire 38 en matériau métallique comprenant une première partie 381 solidaire de la chambre de combustion 16 et une deuxième partie 382 formée dans le prolongement de la première partie 381 et s'étendant au-delà de l'extrémité aval 341 de la chambre de combustion 34 dans la direction de l'axe longitudinal ZZ' de la tuyère 30. Dans le mode de réalisation décrit ici, la bride annulaire 38 est formée intégralement avec la chambre de combustion 34.

L'extrémité amont 361 du divergent 36 en matériau composite est fixée sur la deuxième partie 382 de la bride annulaire 38 par une pluralité d'organes de serrage 40 comprenant chacun une vis de fixation 41 et un écrou 42, chaque vis de fixation 41 traversant la paroi 360 en forme de cône du divergent 36 en matériau composite au niveau de l'extrémité amont 361 de la paroi 360.

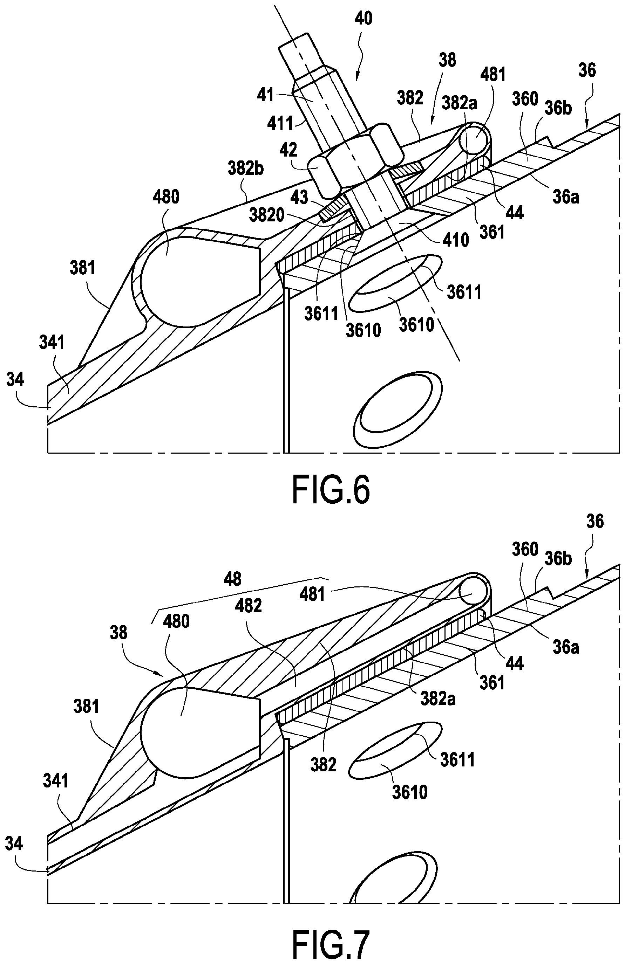

Plus précisément, comme illustrée sur la figure 6, la deuxième partie 382 de la bride annulaire 38 est fixée à la paroi 360 du divergent 36 par des organes de serrage 40 constitué ici d'une vis 41 et d'un écrou 42. Chaque vis 41 comporte une tête conique 410 qui est logée dans une fraisure 3610 présente sur la face interne 36a de la paroi 360 du divergent 36, la tige 411 de la vis 41 traversant un orifice 3611 présent dans la paroi 360 dans le prolongement de la fraisure 3610 et un orifice 3820 présent dans la deuxième partie 382 de la bride annulaire 38. Un écrou 42 est vissé sur la tige 411 du côté de la face externe 382b de la deuxième partie 382 de la bride annulaire. Comme illustrée sur la figure 6, une rondelle élastique 43 (ou rondelle Belleville) peut être interposée entre l'écrou 42 et la face externe 382b de la deuxième partie 382 de la bride annulaire 38 afin notamment de limiter les contraintes dans le matériau composite de la paroi 360 lors de la dilatation des organes de serrage 40 et de la deuxième partie 382. Un joint 44, par exemple sous forme d'une feuille de graphite, est interposé entre la face interne 382a de la deuxième partie 382 de la bride annulaire 38 et la face externe 36b de la paroi 360 du divergent 36 en regard de la deuxième partie 382. La bride 38 réalise ainsi une liaison rigide entre la chambre de combustion 34 et le divergent 36

L'extrémité aval 341 de la chambre de combustion et l'extrémité libre de la bride annulaire 18 comprennent en outre un circuit de refroidissement 48 dans lequel un fluide de refroidissement est destiné à circuler. Le circuit de refroidissement 48 comprend ici un premier canal annulaire 480 de circulation d'un fluide de refroidissement présent au niveau de l'extrémité aval 341 de la chambre de combustion 34 en amont des organes de serrage 40 et un deuxième canal annulaire 481 de circulation d'un fluide de refroidissement qui s'étend le long de l'extrémité libre de la deuxième partie 382 de la bride annulaire 38, le deuxième canal annulaire 382 de circulation étant présent en aval des organes de serrage 40. Le circuit de refroidissement 48 comprend en outre une pluralité de conduits axiaux 482 communiquant avec les premier et deuxième canaux annulaires 480 et 481. Dans l'exemple décrit ici, deux conduits axiaux 482 sont présents entre deux organes de serrages 40 adjacents. Toujours dans l'exemple décrits ici, les conduits axiaux sont ménagés dans des raidisseurs 50 présents sur la face externe de la tuyère 30.

Les brides de fixation 18 et 38 décrites ci-avant forment une liaison rigide entre l'extrémité aval de la chambre de combustion en matériau métallique et l'extrémité amont du divergent en matériau composite. La deuxième partie 182 ou 382 de la bride de fixation annulaire 18 ou 38 est directement fixée sur l'extrémité amont 161 ou 181 du divergent 16 ou 36, extrémité présentant une forme de tronc de cône puisqu'elle correspond à une portion de la paroi principale en forme de cône du divergent et non à une portion supplémentaire qui se prolonge radialement vers l'extérieur de la paroi principale en forme de cône comme dans le document US 2003/136128.

Les divergents 16 et 36 sont de préférence réalisés en matériau composite à matrice céramique (CMC) qui, de façon connue, est un matériau formé d'un renfort en fibres de carbone ou céramique densifié par une matrice au moins partiellement céramique, comme l'un des matériaux composite CMC suivants :
- carbone-carbone/carbure de silicium (C/C-SiC) correspondant à un matériau formé d'un renfort en fibres de carbone et densifié par une matrice comprenant une phase carbone et une phase carbure de silicium,
- carbone-carbure de silicium (C/SiC) qui est un matériau formé d'un renfort en fibres de carbone densifié par une matrice en carbure de silicium,
- carbure de silicium-carbure de silicium (SiC/SiC) correspondant à un matériau formé d'un renfort en fibres de carbure de silicium densifié par une matrice en carbure de silicium
- matériau CMC de type oxyde/oxyde correspondant à un matériau formé d'un renfort en fibres d'oxyde réfractaire, par exemple des fibres à base d'alumine Al₂O₃, densifié par une matrice en oxyde réfractaire.

Les divergents 16 et 36 peuvent également être réalisés en matériau composite carbone/carbone (C/C) qui, de façon connue, est un matériau formé d'un renfort en fibres de carbone densifié par une matrice en carbone et qui peut éventuellement être muni d'un revêtement comme par exemple un dépôt céramique (exemple SiC).

Grâce à l'invention, il n'est plus nécessaire de réaliser une portion de surépaisseur dans le matériau composite du divergent pour la formation d'une bride dans le divergent, ce qui permet de simplifier la fabrication du divergent à une simple paroi fine (« near net shape ») et de réduire, par conséquent, le coût de fabrication du divergent. En effet, grâce à leur forme simple en cône, les préformes destinées à former le divergent peuvent être facilement empilées dans un même four de densification, comme décrit dans les documents US 2004/0071877 et US 2015/0152545, ce qui permet de réduire le coût de fabrication unitaire d'une tuyère.

## Revendications

1. Tuyère (10) présentant un axe longitudinal (ZZ') comprenant une chambre de combustion en matériau métallique (14) présentant une extrémité aval (141) et un divergent (16) en matériau composite formé d'une paroi (160) en forme de cône s'étendant entre une extrémité amont (161) et une extrémité aval (162), l'extrémité amont (161) du divergent en matériau composite étant reliée à l'extrémité aval (141) de la chambre de combustion,
**caractérisée en ce qu'**elle comprend en outre une bride de fixation annulaire (18) en matériau métallique comprenant une première partie (181) solidaire de la chambre de combustion (14) et une deuxième partie (182) s'étendant au-delà de l'extrémité aval (141) de la chambre de combustion (14) dans la direction de l'axe longitudinal de la tuyère (10), les première et deuxième parties de la bride de fixation annulaire étant fixées de manière rigide l'une avec l'autre et **en ce que** l'extrémité amont (161) du divergent en matériau composite est fixée sur la deuxième partie (182) de la bride de fixation annulaire (18) par une pluralité d'organes de serrage (20) comprenant chacun une vis de fixation (21), chaque vis de fixation traversant la paroi (160) en forme de cône du divergent (16) en matériau composite au niveau de l'extrémité amont (161) de ladite paroi.

2. Tuyère selon la revendication 1, dans laquelle la deuxième partie (182) de la bride de fixation annulaire (18) est fixée à la première partie (181) de la bride de fixation annulaire (18) par des organes de serrage 26.

3. Tuyère selon la revendication 1 ou 2, dans laquelle la chambre de combustion (14) comprend un circuit de refroidissement (28) dans lequel un fluide de refroidissement est destiné à circuler, le circuit de refroidissement comprenant au moins un premier canal annulaire (280) de circulation d'un fluide de refroidissement s'étendant le long de l'extrémité aval (141) de la chambre de combustion (14) et à proximité des organes de serrage (20).

4. Tuyère selon la revendication 1, dans laquelle la bride de fixation annulaire (38) est formée intégralement avec la chambre de combustion (34), la deuxième partie (382) de la bride de fixation annulaire (38) étant formée dans le prolongement de la première partie (381) de ladite bride.

5. Tuyère selon la revendication 4, dans laquelle la chambre de combustion (34) comprend un circuit de refroidissement dans lequel un fluide de refroidissement est destiné à circuler, le circuit de refroidissement comprenant au moins un premier canal annulaire (480) de circulation d'un fluide de refroidissement s'étendant le long de l'extrémité aval (341) de la chambre de combustion (34) et à proximité des organes de serrage (40).

6. Tuyère selon la revendication 5, dans laquelle la chambre de combustion (34) comprend un circuit de refroidissement (48) dans lequel le premier canal annulaire (480) de circulation d'un fluide de refroidissement est présent en amont des organes de serrage (40) et dans laquelle le circuit de refroidissement comprend un deuxième canal annulaire (481) de circulation d'un fluide de refroidissement s'étendant le long de l'extrémité libre de la deuxième partie (382) de la bride annulaire (38), ledit deuxième canal annulaire de circulation étant présent en aval des organes de serrage (40).

7. Tuyère selon la revendication 6, dans laquelle le circuit de refroidissement (48) comprend une pluralité de conduits axiaux (482) communiquant avec les premier et deuxième canaux annulaires (480, 481), chaque conduit axial (482) étant présent entre deux organes de serrage adjacents (40).

8. Tuyère selon la revendication 7, dans laquelle une pluralité de raidisseurs (50) sont présents sur la face externe de la tuyère, les conduits axiaux (482) communiquant avec les premier et deuxième canaux annulaires étant logés dans les raidisseurs (50).

9. Tuyère selon l'une quelconque des revendication 1 à 8, dans laquelle un joint (24) est interposé entre la face interne de la deuxième partie (182) de la bride annulaire (18) et la face externe (16b) de la paroi (160) du divergent.

## Patentansprüche

1. Düse (10), die eine Längsachse (ZZ') aufweist, die eine Brennkammer (14) aus Metallmaterial, die ein stromabwärtiges Ende (141) aufweist, und eine Düsenerweiterung (16) aus Verbundmaterial umfasst, die aus einer kegelförmigen Wand (160) besteht, die sich zwischen einem stromaufwärtigen Ende (161) und einem stromabwärtigen Ende (162) erstreckt, wobei das stromaufwärtige Ende (161) der Düsenerweiterung aus Verbundmaterial mit dem stromabwärtigen Ende (141) der Brennkammer verbunden ist,
**dadurch gekennzeichnet, dass** sie ferner einen ringförmigen Befestigungsflansch (18) aus Metallmaterial umfasst, der einen ersten Teil (181), der fest mit der Brennkammer (14) verbunden ist, und einen zweiten Teil (182) umfasst, der sich über das stromabewärtige Ende (141) der Brennkammer (14) hinaus in der Richtung der Längsachse der Düse (10) erstreckt, wobei der erste und der zweite Teil des ringförmigen Befestigungsflansches auf starre Weise aneinander befestigt sind, und dadurch, dass das stromaufwärtige Ende (161) der Düsenerweiterung aus Verbundmaterial durch eine Vielzahl von Spannorganen (20), die jeweils eine Befestigungsschraube (21) umfassen, an dem zweiten Teil (182) des ringförmigen Befestigungsflansches (18) befestigt ist, wobei jede Befestigungsschraube die kegelförmige Wand (160) der Düsenerweiterung (16) aus Verbundmaterial im Bereich des stromaufwärtigen Endes (161) der Wand durchquert.

2. Düse nach Anspruch 1, wobei der zweite Teil (182) des ringförmigen Befestigungsflansches (18) durch Spannorgane (26) an dem ersten Teil (181) des ringförmigen Befestigungsflansches (18) befestigt ist.

3. Düse nach Anspruch 1 oder 2, wobei die Brennkammer (14) einen Kühlkreis (28) umfasst, in dem ein Kühlfluid bestimmt ist, umzulaufen, wobei der Kühlkreis mindestens einen ersten ringförmigen Kanal (280) für den Umlauf eines Kühlfluids umfasst, der sich entlang des stromabwärtigen Endes (141) der Brennkammer (14) und in der Nähe der Spannorgane (20) erstreckt.

4. Düse nach Anspruch 1, wobei der ringförmige Befestigungsflansch (38) einteilig mit der Brennkammer (34) gebildet ist, wobei der zweite Teil (382) des ringförmigen Befestigungsflansches (38) in der Verlängerung des ersten Teils (381) des Flansches gebildet ist.

5. Düse nach Anspruch 4, wobei die Brennkammer (34) einen Kühlkreis umfasst, in dem ein Kühlfluid bestimmt ist, umzulaufen, wobei der Kühlkreis mindestens einen ersten ringförmigen Kanal (480) für den Umlauf eines Kühlfluids umfasst, der sich entlang des stromabwärtigen Endes (341) der Brennkammer (34) und in der Nähe der Spannorgane (40) erstreckt.

6. Düse nach Anspruch 5, wobei die Brennkammer (34) einen Kühlkreis (48) umfasst, in dem der erste ringförmige Kanal (480) für den Umlauf eines Kühlfluids stromaufwärts der Spannorgane (40) vorhanden ist und wobei der Kühlkreis einen zweiten ringförmigen Kanal (481) für den Umlauf eines Kühlfluids umfasst, der sich entlang des freien Endes des zweiten Teils (382) des ringförmigen Flansches (38) erstreckt, wobei der zweite ringförmige Umlaufkanal stromabwärts der Spannorgane (40) vorhanden ist.

7. Düse nach Anspruch 6, wobei der Kühlkreislauf (48) eine Vielzahl von axialen Leitungen (482) umfasst, die mit dem ersten und dem zweiten ringförmigen Kanal (480, 481) verbunden sind, wobei jede axiale Leitung (482) zwischen zwei benachbarten Spannorganen (40) vorhanden ist.

8. Rohr nach Anspruch 7, wobei eine Vielzahl von Versteifungen (50) auf der Außenseite der Düse vorhanden sind, wobei die axialen Leitungen (482), die mit dem ersten und dem zweiten ringförmigen Kanal verbunden sind, in den Versteifungen (50) untergebracht sind.

9. Rohr nach einem der Ansprüche 1 bis 8, wobei eine Dichtung (24) zwischen der Innenseite des zweiten Teils (182) des ringförmigen Flansches (18) und der Außenseite (16b) der Wand (160) der Düsenerweiterung angeordnet ist.

## Claims

1. A nozzle (10) presenting a longitudinal axis (ZZ') and comprising both a combustion chamber (14) made of metal material and presenting a downstream end (141) and also a diverging portion (16) made of composite material formed by a wall (160) of conical shape extending between an upstream end (161) and a downstream end (162), the upstream end (161) of the composite material diverging portion being connected to the downstream end (141) of the combustion chamber;
the nozzle being **characterized in that** it further comprises an annular fastener mount (18) made of metal material comprising a first portion (181) secured to the combustion chamber (14) and a second portion (182) extending beyond the downstream end (141) of the combustion chamber (14) in the direction of the longitudinal axis of the nozzle (10), the first and second portions of the annular fastener mount being rigidly secured to each other, and **in that** the upstream end (161) of the composite material diverging portion is fastened to the second portion (182) of the annular fastener mount (18) by a plurality of fastener members (20), each comprising a fastener bolt (21), each fastener bolt passing through the conically-shaped wall (160) of the composite material diverging portion (16) near the upstream end (161) of said wall.

2. A nozzle according to claim 1, wherein the second portion (182) of the annular fastener mount (18) is fastened to the first portion (181) of the annular fastener mount (18) by fastener members (26).

3. A nozzle according to claim 1 or claim 2, wherein the combustion chamber (14) includes a cooling circuit (28) for passing a flow of cooling fluid, the cooling circuit comprising at least a first annular channel (280) for passing a flow of cooling fluid extending along the downstream end (141) of the combustion chamber (14) and in the proximity of the fastener members (20).

4. A nozzle according to claim 1, wherein the annular fastener mount (38) is formed integrally with the combustion chamber (34), the second portion (382) of the annular fastener mount (38) extending the first portion (381) of said mount.

5. A nozzle according to claim 4, wherein the combustion chamber (34) includes a cooling circuit for passing a flow of cooling fluid, the cooling circuit comprising at least a first annular channel (480) for passing a flow of cooling fluid extending along the downstream end (341) of the combustion chamber (34) and in the proximity of the fastener members (40).

6. A nozzle according to claim 5, wherein the combustion chamber (34) includes a cooling circuit (48) in which the first annular channel (480) for passing a flow of cooling fluid is present upstream from the fastener members (40) and in which the cooling circuit includes a second annular channel (481) for passing a flow of cooling fluid that extends along the free end of the second portion (382) of the annular mount (38), said second annular flow channel being present downstream from the fastener members (40).

7. A nozzle according to claim 6, wherein the cooling circuit (48) includes a plurality of axial ducts (482) communicating with the first and second annular channels (480, 481), each axial duct (482) being present between two adjacent fastener members (40).

8. A nozzle according to claim 7, wherein a plurality of stiffeners (50) are present on the outside face of the nozzle, the axial ducts (482) communicating with the first and second annular channels being received in the stiffeners (50).

9. A nozzle according to any one of claims 1 to 8, wherein a gasket (24) is interposed between the inside face of the second portion (182) of the annular mount (18) and the outside face (16b) of the wall (160) of the diverging portion.
